# EUROPEAN PATENT APPLICATION

(11) **EP 0 561 477 A1**
(43) Date of publication of application: **22.09.1993**
(21) Application number: 93200818.8
(22) Date of filing: 19.03.1993
(51) Int. Cl.: C08K 7/04, C08L 23/08, C08L 23/16

(54) **Synthetic mineral fibre reinforced polymers**

(30) Priority: 20.03.1992 EP 92200815
(71) Applicant: BENNET B.V., NL-1322 AK Almere (NL)
(72) Inventor: van der Groep, Lambertus Adrianus, NL-1112 HN Diemen (NL)
(74) Representative: Smulders, Theodorus A.H.J., Ir.

(57) **Abstract**

The invention relates to a blend of rockwool and/or slagwool fibres and a reaction product of at least one EPDM rubber, at least one ethylene-vinyl acetate copolymer and at least one ethylene copolymer.

## Description

The present invention relates to a blend of rockwool or slagwool, and a compatibilizer, to the use of said blend for preparing synthetic mineral fibre reinforced polymers and to a process for preparing said reinforced polymers.

It is known in the art to reinforce polymers, such as polyolefins, polyamides, styrene polymers and engineering plastics, with various kinds of fibres. The use of chopped glass fibres in polymers is known to result in an increase in modulus with a large decrease in toughness. It has been tried to incorporate rockwool or slagwool fibres in polymers. However this resulted in such a decrease in the fibre length, that it only resulted in a slight increase of the mechanical properties, such as the modulus of the polymers.

It is an object of the invention to provide a system that makes it possible to incorporate fibres of rockwool or slagwool in polymers without the problems inherent to the conventional use of said fibres in polymers.

The invention provides a blend of stone fibres, uch as rockwool or slagwool, and a reaction product of at least one EPDM rubber, at least one ethylene-vinyl acetate copolymer and at least one ethylene copolymer. Said blend can be a physical mixture obtained by simply dry blending the stone fibres and the reaction products. Such a dry blend can be mixed with the polymer or blend of polymers to be modified, and subsequently extruded at a temperature above the melt temperature of the polymer. In a preferred embodiment of the invention the said blend has been obtained by blending the fibres and the reaction product at a temperature above the melting point of the reaction product. In this way the fibres remain homogeneously distributed throughout the reaction product and can be mixed into the polymer or blend of polymers to be modified in a reproducible manner. Surprisingly it has been found that the incorporation of the fibres in the reaction product can and preferably should be done at high shear, i.e. in a standard multipurpose polyethylene extruder at a screw speed of 150 to 500 min⁻¹.

The weight ratio of fibres and the reaction product in the blend varies in dependence of the use, but will generally lie between 10 to 1 and 1 to 10. A preferred ratio is between 7.5 to 1 and 1 to 1. Within this ratio it is possible to obtain the optimal results, i.e. the length of the fibres is maintained as good as possible.

The said reaction product is preferably prepared by reaction of the components at elevated temperature, more in particular at a temperature above the melting point of the polymers, more in particular above 200°C. The various components are respectively EPDM rubber, ethylene-vinyl acetate copolymer and ethylene copolymer. The EPDM rubber is a conventional rubber based upon ethylene and propylene, optionally combined with one or more comonomers, such as at least one non-conjugated diene. Preferred dienes are 1,4-hexadiene or dicyclopentadiene. The ethylene-vinylacetate polymer can be the conventional polymers, prepared by high pressure radical polymerisation. Suitable vinylacetate contents are between 10 and 35 %. The ethylene copolymer can be any suitable polymer of ethylene, other than those already described herein. Examples of suitable polymers are LLDPE, VLDPE and other copolymers of ethylene with comonomers, such as 1-alkenes, like 1-butene, 1-hexene, 1-octene and mixtures of two or more thereof, optionally in combination with comonomers having reactive groups, like carboxyl-groups.

The reaction product that is preferably used is described in European patent applications Nos. 287,140 and 316,037, the contents of which is incorporated herein by reference. According to one preferred embodiment the reaction product of the latter application is used, which reaction product is defined as based upon 1-10 wt.% of EPDM rubber, 35-65 wt.% of ethylene-vinyl acetate copolymer and 30-60 wt.% ethylene/1-(C₄-C₈)alkylene copolymer.

According to another embodiment the material defined in European patent application No. 287,140 is used, namely the reaction product of 30-70 wt.% of EPDM rubber, 30-70 wt.% of ethylene-vinyl acetate copolymer and 1-25 wt.% ethylene/1-(C₄-C₈) alkylene copolymer. Finally, it is also possible to use a combination of both reaction products. The ethylene/1-(C₄-C₈)alkylene copolymer can be any suitable copolymer, although the use of 1-hexene and 1-octene copolymers are preferred.

The said reaction product can be prepared in the manner disclosed in the two cited European patent applications. More in particular this can be done by melt-mixing the components in the required ratio in a suitable extruder, providing sufficient shear and heat to obtain the reaction. The required melt temperature for the reaction is usually at least 150°C, more in particular between 175 and 275°C.

The fibres should preferably be made of rockwool or slagwool. Said product has a fibre length wich can range from 50 to 800 µm. The thickness of the fibres is usually between 1 and 10 µm.

In a preferred embodiment the fibres have been coated with a silane coating agent or any other coating agent suitable for said fibres, usually based on silicons. The said coating agent may be a conventional silane coating agent or a modified silane coating agent, for example containing one or more substituents, like carboxy-, alkoxy-, hydroxyl-, amine-, and/or amidegroups. According to this preferred embodiment the improvement of the properties, that is obtained by using the blend for modifying a polymer or polymeric composition is more pronounced. More in particular a coating is used that may react with the said reaction product.

The blend according to the invention is useful for modifying polymers or polymeric blends. More in particular the blend, when incorporated in a polymer composition improves the stiffness or modulus of the polymers, without causing an unacceptable decrease in the other properties. In fact it has been observed that in a glass fibre reinforced product having a comparable modulus, the decrease of properties like toughness and Izod are much larger. The blend of the pesent invention thus allows a much better compromise between the various properties. In addition the blend of the invention may provide an improvement in other properties of the composition, like barrier properties or ageing resistance.

A further important aspect of the present invention is the improvement in flame resistant properties, obtained through the use of the specific blend in thermoplastic and other polymers. It has been found that a polymer modified in accordance with the invention shows a much better flame resistance than polymers modified with, for example, glass fibres.

Suitable polymers to be modified by the blend of the present invention are the conventional bulk polymers, like polyolefins, styrene polymers, polyesters, polyamides and the like. More in particular the following examples can be mentioned: polyethylene, polypropylene, nylon 6, nylon 66, polystyrene, HIPS, MIPS, SAN, SMA, ABS, AES, PBT and PET.

In a preferred embodiment of the invention the blend is used in a composition of two or more polymers that are generally considered as incompatible. Through the use of the reaction product, and more in particular the reaction product of the European patent No. 287,140, not only the synthetic mineral fibres retain their properties in the polymer composition, but also the components of the composition become compatible with each other.

Generally the properties of a polymer composition that can be improved are rigidity, orientation/warpage, temperature resistance, flowability/processability, flame retardent properties, surface finish, homogenity and/or recyclability.

According to a specific embodiment of the invention the blend can be used for modifying recycled polymeric material such as polymer scrap to a composition from which products with improved properties can be prepared.

The preparation of the polymeric composition modified with the blend according to the invention can be done in any manner known in the art, for example by dry blending followed by extrusion at a temperature above the melting point of the components. In the same manner as described in relation to the preparation of the blend also the polymeric composition according to the invention can and should preferably be subjected to a high shear, for example more than 200 rpm of the extruder screw.

The invention is now elucidated in and by the following examples, without being limited thereto.

### EXAMPLES

Various polymer compositions were prepared by moulding a dry blend of rockwool fibres, a reaction product and a polymer at various moulding conditions. The weight ratio of the said three components was in all experiments 30/5/65.

The rockwool fibres were conventional silane coated fibres. The reaction product was the reaction product of an EPDM rubber, an ethylene-vinyl acetate copolymer (28% VA) and an ethylene copolymer, i.e. ethylene/1-C₈-alkylene copolymer, obtained by reaction of the said components in a ratio of 5/45/50 at a temperature of 215°C.

A medium impact polystyrene (MIPS 512-31, Vestyron/Hüls) was blended as indicated above with rockwool and the reaction product and moulded at 300 rpm⁻¹, mould temperature 60°C, barrel temperature 240°C, using a 25 LD screw, PE configuration. The results of were compared with the results of the pure MIPS.

| | Blend | Pure |
|---|---|---|
| Breakstress (MPa) | 29.8 | 18.5 |
| Breakstrain (%) | 2 | 13.2 |
| Flex modulus (MPa) | 4526 | 2455 |
| IZOD (Notched, kJ/m²) | 2.2 | 4.9 |
| MFI 2.16/230 (dg/min) | 7.9 | 16.9 |

A general purpose polystyrene (GPPS GA100 Norsolor) was blended as indicated above with rockwool and the reaction product and moulded at 400 rpm⁻¹, mould temperature 60°C, barrel temperature 240°C, using a 25 LD screw, PE configuration. The results of were compared with the results of the pure polystyrene.

| | Blend | Pure |
|---|---|---|
| Breakstress (MPa) | 51.6 | 50.3 |
| Breakstrain (%) | 3.4 | 4.0 |
| Flex modulus (MPa) | 5821 | 3436 |
| IZOD (Notched, kJ/m²) | 1.7 | 1.8 |
| MFI 2.16/230 (dg/min) | 2.3 | 6.1 |

An ABS (Monsanto QE 1083) was blended with rockwool and the reaction product in a ratio of 75/20/5 (Example 3) and at a ratio of 65/30/5 (Example 4). These blends were moulded at 200 rpm⁻¹, mould temperature 80°C, barrel temperature 240°C, using a 25 LD screw, PE configuration.

| | Example 3 | Example 4 |
|---|---|---|
| Yieldstress (MPa) | 42.3 | 41.3 |
| Yieldstrain (%) | 3.8 | 3.0 |
| Breakstress (MPa) | 39.8 | 39.6 |
| Breakstrain (%) | 5.5 | 3.8 |
| Flex modulus (MPa) | 6009 | 6922 |
| IZOD (Notched, kJ/m²) | 3.3 | 3.4 |

In the same manner as indicated above three blends were prepared using HDPE, PP and Nylon 6.

| | HDPE | PP | Nylon 6 |
|---|---|---|---|
| Yieldstress (MPa) | 31.7 | 25.2 | 82.0 |
| Yieldstrain (%) | 2.9 | 3.3 | 3.2 |
| Breakstress (MPa) | 30.5 | 17.0 | 81.9 |
| Breakstrain (%) | 5.0 | 36.7 | 4.0 |
| Flex modulus (MPa) | 2433 | 2051 | 4056 |
| IZOD (Notched, kJ/m²) | 4.1 | 5.8 | 5.2 |
| MFI (ISO 1133, g/10min) | 3.48 | 1.16 | - |
| HDT (ISO 75, 0.45N/mm²) | 90.5°C | - | 156.5°C |
| VICAT (ISO 306, 50N) | 79.2°C | - | 184.5°C |

## Claims

1. Blend of rockwool and/or slagwool fibres and at least one reaction product of at least one EPDM rubber, at least one ethylene-vinyl acetate copolymer and at least one ethylene copolymer.

2. Blend according to claim 1, wherein an ethylene/1-(C₄-C₈)alkylene copolymer is used.

3. Blend according to claim 1 or 2, wherein the ratio of said fibres to reaction product is between 10 to 1 and 1 to 10, preferably between 7.5 to 1 and 1 to 1.

4. Blend according to claim 1-3, wherein the fibres have been coated with a silane coating agent, such as a conventional silane coating agent or a modified silane coating agent, containing one or more substituents, like carboxy-, alkoxy-, hydroxyl-, amine-, and/or amidegroups.

5. Polymer composition comprising at least one polymer and 1 to 40 wt.% of the blend of any one of the claims 1-4.

6. Polymer composition according to claim 5, wherein the said at least one polymer is chosen from the group of polyethylene, polypropylene, nylon 6, nylon 66, polystyrene, HIPS, MIPS, SAN, SMA, ABS, AES, PBT and PET.

7. Process for preparing a blend according to claim 1, comprising feeding the said fibres and the at least one reaction product to an extruder and mixing the components at a temperature above the melting point of the reaction product until a homogeneous dispersion has been obtained, at a high shear rate.

8. Process for preparing a polymer composition according to claim 5 or 6, comprising feeding the blend and the at least one polymer to an extruder and mixing the components at a temperature above the melting point of the components until a homogeneous dispersion has been obtained, at a high shear rate.
